# EUROPEAN PATENT SPECIFICATION

(11) **EP 2 508 414 B1**
(45) Date of publication and mention of the grant of the patent: **12.02.2014**
(21) Application number: 11161321.2
(22) Date of filing: 06.04.2011
(51) Int. Cl.: B62D 25/20

(54) **Body of an industrial vehicle with seat base integrated to the floor and method for realizing a body of an industrial vehicle**
Karosserie eines Industriefahrzeugs mit einer Sitzbasis, die in den Boden integriert ist, und Verfahren zur Herstellung einer Karosserie eines Industriefahrzeugs
Corps d'un véhicule industriel avec support de siège intégré au plancher et procédé de fabrication d'une carrosserie d'un véhicule industriel

(43) Date of publication of application: 10.10.2012
(73) Proprietor: IVECO S.p.A., 10156 Torino (IT)
(72) Inventor: Zogno, Stefano, 10015, IVREA (IT)
(74) Representative: Gervasi, Gemma

(56) References cited:
- DE-A1-102009 021 777
- JP-A- 2010 149 620
- US-A1- 2010 090 493

## Description

### FIELD OF THE INVENTION

The present invention belongs to the field of the manufacturing of bodies of industrial vehicle with medium and/or high capacity. More precisely the invention relates to a body of an industrial vehicle with at least a seat base welded to the floor of the body itself. The present invention relates also to a method for realizing a body of an industrial vehicle.

### DESCRIPTION OF THE PRIOR ART

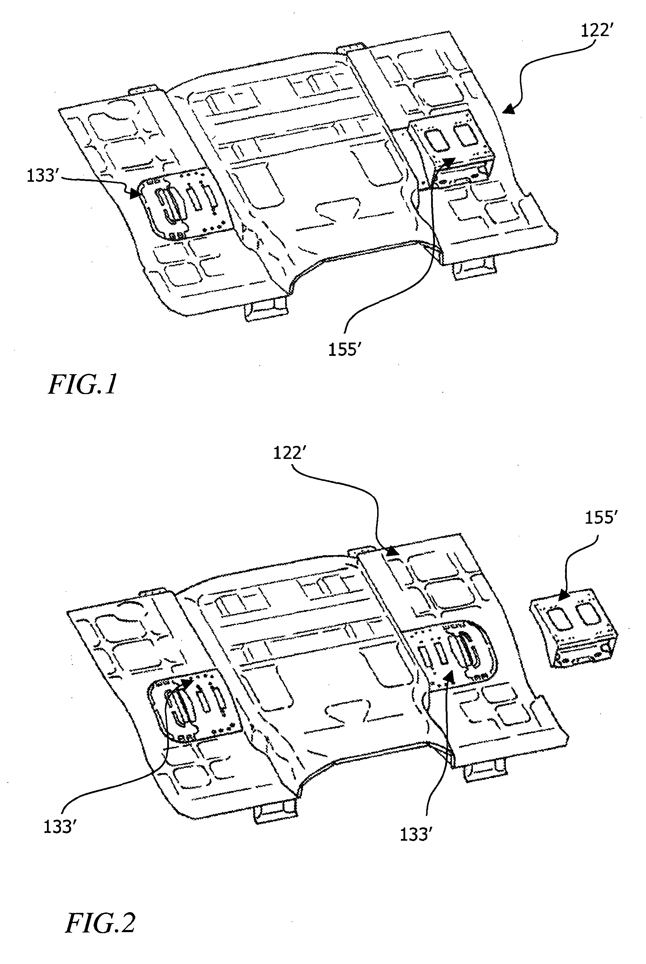

As it is known, the cabin of a motor vehicle is formed by a body and a roof that is connected to the upper part of the body itself. The body comprises a floor which supports the internal elements of the cabin, among which the seats for the driver and for the passengers. In particular each seat is mounted, usually by means of connecting screws, on a support structure usually indicated by the expression "seat base". Figure 1 shows the floor 122' of a body of an industrial vehicle of the type known in the art, to which the seat base 155' is connected. Figure 2, on the other hand, shows the same seat base 155' being separate from the floor 122'. In the part of the surface that is connected to the seat base 155', the floor 122' is reinforced by a stiffening plate 133'. Such stiffening plate 133' is necessary since every seat base 155' is connected to the floor by means of connecting screws or bolts. In the solution shown, as in almost any known solution, four connection points are provided.

The function of the stiffening plate 133' is obviously that of locally increasing the strength and the thickness of the floor 122', in order to avoid its deformation and/or its subsidence that may occur when both the seat and its respective seat base are stressed, as for example during the braking of the vehicle. Indeed, it is known that seat bases are tested to bear a tensile stress of at least 1500 kg. It is evident that when such a stress is concentrated in only four connection points, it requires both a floor 122' and a stiffening plate 133' with a remarkable thickness. A support plate 133' welded to the floor, even though it is actually necessary, is however a limit in terms of time and of money employed for the body manufacturing process.

Moreover, a four-point connection system, like the one traditionally used, generates vibrations when the vehicle is travelling, above all if it travels on uneven roads. In other words, such connection system used at present is quite unstable and uncomfortable both for the driver and/or the passengers.

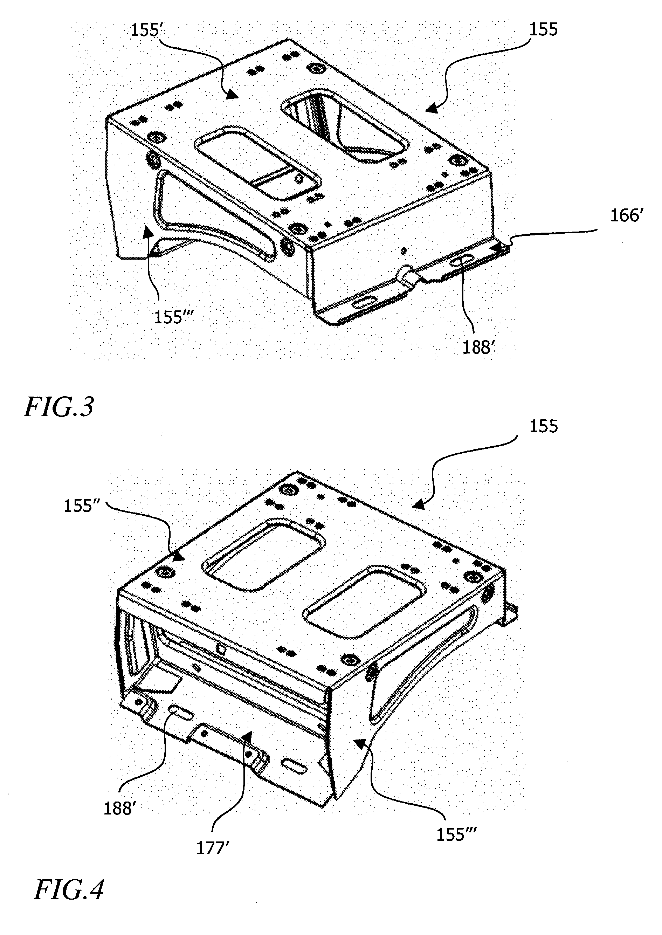

Figures 3 and 4 show in a greater detail a seat base 155' of the type known in the art, which, similarly to a lot of other seat bases used at present, is made by a plurality of elements that are assembled to each other, usually by welding. In the case shown, for example, the seat base comprises a front 166' and a rear connecting portion 177', which define the housings 188' for the connecting screws (not shown in the figures). The seat base 155' showed in the figures comprises also a substantially flat surface 155" to connect the seat (not shown in the figures) and a pair of flanks 155''' which laterally support the connecting portions 166' and 177'.

From the point of view of the manufacturing process of the body, the seat base 155' is first assembled, then painted, and finally connected to the floor 122', after that also the latter has been painted, in an independent process. Thus it is evident, that the manufacturing process of the body is quite complicated and is highly influenced, in terms of manufacturing time and costs, by the structure of the seat base and by the presence of a discrete point connection system (four connection points by means of screws).

**Another example of a mounting system of a seat on a floor of a vehicle is disclosed in** US 2010/0090493**, which features according to the preamble of claim 1.**

### SUMMARY OF THE INVENTION

According to these considerations, the main task of the present invention is to provide a body for a commercial vehicle which allows to overcome the drawbacks mentioned above. A first aim is to provide a body of the type comprising one or more seat bases which can be easily assembled, with reduced manufacturing costs and time. Another aim is to provide a body for an industrial vehicle of the type comprising one or more seat bases which is particularly stable and strong. A further aim is to provide a body that does not have stiffening elements of the floor of the body itself. Not least the purpose of the present invention is to provide a body for an industrial vehicle which is reliable and easy to manufacture with competitive costs.

This task and these aims are obtained by means of a body for industrial vehicles comprising at least a first seat base, to which a seat can be connected, and a floor which defines at least a first bearing surface and at least a second bearing surface for said seat base. In particular said second bearing surface has a raised course with respect to the first bearing surface. According to the invention, the seat base is formed by a hollow body, made by molding, and comprises a connecting part, to which it is possible to connect the seat, and a support part that develops from the connecting part. The seat base comprises a first connecting edge welded to the first bearing surface of the floor and at least a second connecting edge welded to the second bearing surface of the floor. Unlike the traditional solutions, according to the present invention the seat base is advantageously made by molding and is welded to the floor of the body on two different surfaces of the floor itself, the one has a raised course with respect to the other, namely on different planes. Such solution allows an extremely stable connection of the seat base which does not generate vibrations. In particular, the welding allows the seat base to be actually integrated to the floor, advantageously reinforcing the structure. At the same time, the stresses acting on the seat base are advantageously distributed on a wide floor surface, thus they are not concentrated in a limited number of points. Such an improved load distribution results in the possibility of avoiding the use of stiffening plates, which are usually used to increase the strength of the floor itself.

The present invention relates also to a method for realizing a body of an industrial vehicle of medium or high capacity. The method according to the invention comprises the steps of:
- realizing a floor defining a first bearing surface and a second bearing surface for said seat base, said second bearing surface having a raised course with respect to said first bearing surface.
- realizing, by metal molding, a seat base defining a connecting part to which a seat can be connected and a support part developing from said connecting part, said seat base being realized so that it defines a first connecting edge and at least a second connecting edge;
- welding said first connecting edge to said first bearing surface of said floor and weld said at least a second connecting edge to said second bearing surface of said floor.

### LIST OF THE FIGURES

Further characteristics and advantages will become more evident from the following detailed description of embodiments of a body of an industrial vehicle according to the present invention, that is shown in a merely illustrative and not limitative form in the attached drawings wherein:
- Figure 1 shows a first prospective view of a known body of an industrial vehicle according to the prior art;
- Figure 2 shows an exploded prospective view of the body of Figure 1;
- Figures 3 and 4 are prospective views from different points of view of a known seat base according to the prior art;
- Figure 5 shows a prospective view of a first embodiment of a body of an industrial vehicle according to the present invention;
- Figure 6 shows lateral view of the body of Figure 5;
- Figure 7 shows an exploded prospective view of the body of Figure 5;
- Figures 8 and 9 are prospective views from different points of view of a seat base of the body of Figure 5;
- Figure 10 shows a prospective view of a second embodiment of a body of an industrial vehicle according to the present invention;
- Figure 11 shows lateral view of the body of Figure 10;
- Figure 12 shows an exploded view of the body of Figure 10;
- Figures 13, 14 and 15 are prospective views from different points of view of a seat base of the body of Figure 10.

### DETAILED DESCRIPTION OF THE INVENTION

With reference to the figures from 5 to 15, the body 1, 1' according to the present invention comprises at least a seat base 5, 5', 55, 55' to which a seat (not shown in the figures) can be connected in a traditional way, for example by means of connecting screws and/or bolts. The body 1, 1' comprises also a floor 2, 2' which supports the seat base 5, 5', 55, 55'. More precisely, the floor 2, 2' defines a first bearing surface 11, 11', 111, 111' for said at least a first seat base 5, 5', 55, 55'. The floor 2, 2' defines also a second bearing surface 12, 12', 112, 112' for said seat base 5, 5', 55, 55'. Said second bearing surface 12, 12', 112, 112' has a raised course with respect to said first bearing surface 11, 11', 111, 111'. This means that the second surface 12, 12', 112, 112' develops, at least partially, on a different plane from the one of the first bearing surface 11, 11', 111, 111'. Said second bearing surface 12, 12', 112, 112' protrudes substantially upwards with respect to said first bearing surface 11, 11', 111, 111'.

According to the present invention, said at least a seat base 5, 5', 55, 55' comprises a body, preferably made of metal, realized by molding. In particular, such body comprises a connecting part 51, 61', to which the seat (not shown in the figures) can be connected, and a support part 52, 52' which develops from at least a perimetral portion of the connecting part 51, 61'. The lower part of said support part 52, 52' is delimited by a first connecting edge 53, 53' which develops so that it geometrically matches with the first bearing surface 11, 11', 111, 111' of the floor 2, 2'. The body of the first seat base 5, 5' comprises also at least a second connecting edge 54, 54' which develops so that it geometrically matches with the second bearing surface 12, 12', 112, 112'. The expression "it geometrically matches" means a condition wherein the profile of the first connecting edge 53, 53', once it rests on the first bearing surface 11, 11', 111, 111', substantially matches the surface itself. In the same way, for the second connecting edge 54, 54' the expression "it geometrically matches" means a condition wherein such edge matches the second surface 12, 12', 112, 112' once resting on the latter.

According to the present invention the first connecting edge 53, 53' is welded to the first bearing surface 11, 11', 111, 111', while the second connecting edge 54, 54' is welded to the second bearing surface 12, 12', 112, 112'. In other words, the seat base 5, 5' is advantageously realized in a single piece, and is also welded to two surfaces of the floor 2, 2' which develop according to different planes.

As it will become more clear from the continuation of the description, the welding of the seat base 5, 5', 55, 55' to the floor 2, 2' generates several advantages, the first of which being an improved distribution of the stresses on the floor itself, and therefore a reduction of the vibrations transmitted to the seat. This, of course, results in a higher comfort for the passenger. A laser seam welding, for example, allows a distribution of the stresses on a wide surface of the floor 2, 2', and avoids concentrating them in a reduced number of points, as it occurs in the traditional solutions. As indicated above, the seat base 5, 5', 55, 55' is made of a single piece of molded metal. Also this solution has numerous advantages, the first of which being a reduction of the manufacturing time and costs of the seat base 5, 5', 55, 55' and thus of the body 1, 1'. Moreover, after welding the seat base 5, 5', 55, 55' to the floor, the same base 5, 5', 55, 55' may be advantageously painted together with the body 1, 1'. Such possibility allows to spare further processing time and costs.

Figures from 5 to 9 show a first possible embodiment of a body 1 according to the present invention. The floor 2 of the body 1 is shaped in a substantially symmetrical way with respect to a plane of symmetry 200. In particular, the floor 2 comprises a first portion (in the following indicated as first lateral portion 21), a second portion (in the following indicated as middle portion 23) and a third portion (in the following indicated as second lateral portion 22). The middle portion 23 is developed between the two lateral portions 21 and 22. The first lateral portion 21 and the second lateral portion 22 have a substantially symmetrical position with respect to the plane of symmetry 200, developing from opposite sides of the middle portion 23.

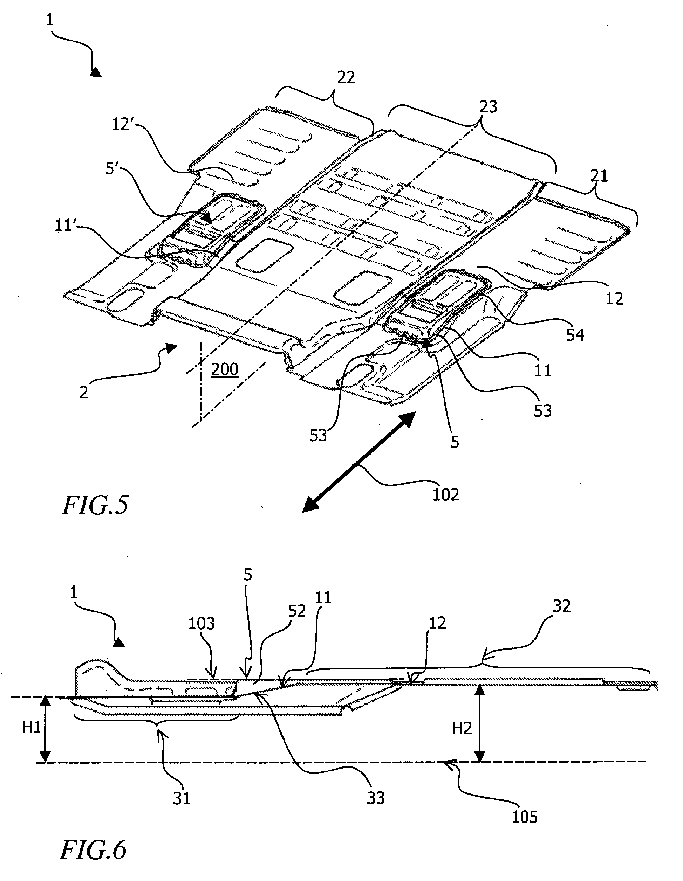

With reference to figure 5, the body 1 preferably comprises two seat bases 5, 5' symmetrically arranged with respect to the middle portion 23 of the floor 2. The first lateral portion 21 of the floor 2 defines the first bearing surface 11 and the second bearing surface 12 for a first seat base 5. In the same way, the second lateral portion 22 of the floor 2 defines a first bearing surface 11' and a second bearing surface 12' for a second seat base 5'.

Figure 6 is a lateral view of the body 1 of Figure 5 and shows the shape of the first lateral portion 21 of the body itself. Given the symmetry of the floor, the following considerations are valid also for the second lateral portion 22 of the floor 2.

The first portion 21 of the floor 2 comprises a first region 31 (in the following indicated as front region 31) and a second region 32 (in the following indicated as rear region 32) substantially flat and raised, namely in an upward protruding position with respect to the first region 31. This means that the front region 31 develops at an height H1 lower than the height H2 of the rear region with respect to the same reference plane 105 that is substantially horizontal. The first lateral portion 21 of the floor 2 comprises also an "inclined" intermediate region 33 which connects the front region 31 with the rear region 32, substantially developing on an inclined plane. The raised position of the second region 32 with respect to the first region 32 defines a space under the floor 2 that is useful for accommodating one of the front wheels of the industrial vehicle.

With reference to figures 5 and 6 again, in this first embodiment of the body 1, the first bearing surface 11 is substantially defined by the "inclined" intermediate region 33, while the second bearing surface 12 is defined by the rear region 32 that is substantially "flat". Consequently, the first connecting edge 53 and the second connecting edge 54 of the first seat base 5 are welded respectively on the inclined region and on the rear "flat" region of the first lateral portion 21 of the floor 2.

This technical solution allows a more efficient distribution of the stresses on the floor 2 of the body 1 of the vehicle and in general improves the stability of the first seat base 5. In fact, possible stresses oriented according to a longitudinal direction (indicated by 102 in figure 5) parallel to the plane of symmetry 200 of the body 1 are advantageously distributed on the whole intermediate region 33 and on the whole rear region 32 of the first lateral portion 21 of the body 1, and are also partially absorbed by the middle portion 23, by virtue of the continuity that is present among the portions 21, 22, 23 of the floor 2.

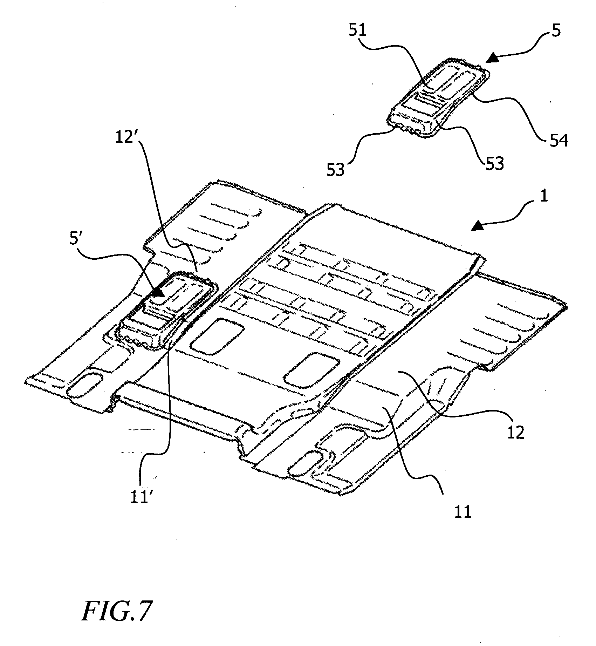

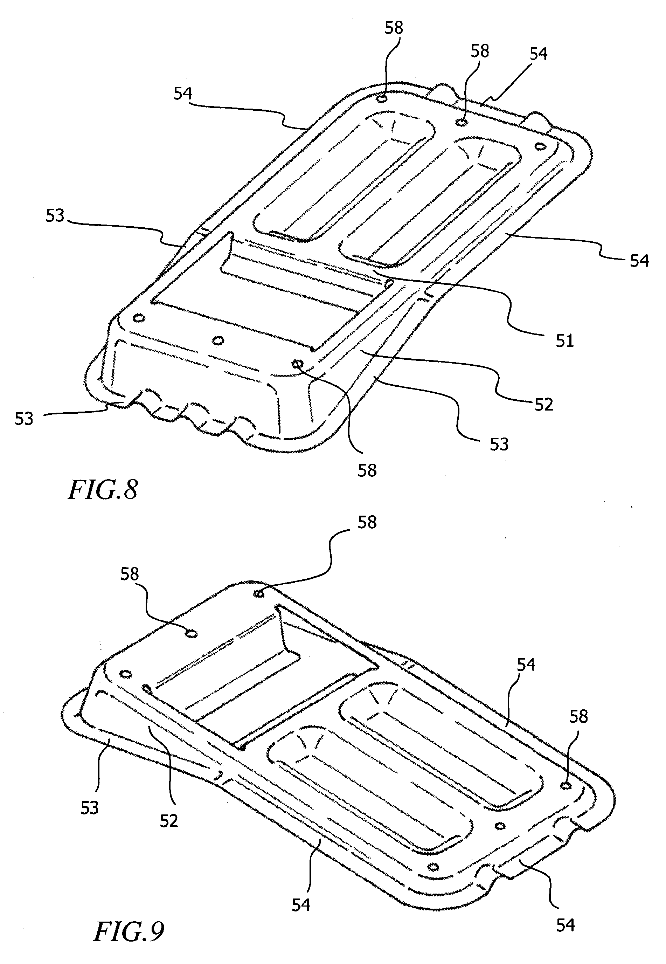

With reference to figures 5 and 7 again, each one of the first seat base 5 and the second seat base 5' is formed by a hollow body realized by molding and has preferably the same configuration as the other. Figures 8 and 9 show in detail the configuration of the seat base 5, 5' of the body 1' of Figures 5 and 7 from different points of view. For the sake of simplicity, in the continuation of the description we will refer to the first seat base 5 connected by welding to the first lateral portion 21 of the floor 2, but the considerations are valid also for the second seat base 5' welded to the bearing surfaces 11', 12' defined by the second lateral portion 22.

With reference to figure 8 the body of the first seat base 5 comprises a connecting part 51 to which a seat (not shown in the figures) can be connected. The upper connecting surface 51 preferably comprises openings 58 and/or appropriately shaped portions for positioning the fixing means of the seat. Such fixing means may comprise connecting screws or other functionally equivalent elements.

The body of the first seat base 5 comprises a support part 52 which develops from the connecting part 51 and defines the lower part of the first connecting edge 53 (in the following indicated also as front edge 53) and the second connecting edge 54 (in the following indicated also as rear edge 54).

In the solution shown, the second connecting edge 54 of the first seat base 5 is continuous with the first connecting edge 53. In other words, the two connecting edges 53 and 54 define together a perimetral continuous welding region of the seat base 5. As shown in figures 8 and 9, the connecting edges 53, 54 develop outwards, in order to facilitate the welding of the bearing surfaces 11, 12.

As said above, the shape of the first connecting edge 53 matches with the shape of the first surface 11 of the first lateral portion 21 and is welded to such surface along its whole extension. Similarly, the shape of the second connecting edge 54 matches with the shape of the second connecting surface 12 of the first lateral portion 21 and is welded to such surface along its whole extension.

With reference again to figure 6, it is possible to see that the support part 52 of the first seat base 5 is shaped so that, after the welding of the connecting edges 53, 54 to the respective bearing surfaces 11 and 12, the connecting part 51 is arranged on a plane 103 substantially parallel to a reference horizontal plane 105. Such solution allows a perfectly horizontal positioning of the seat that will be mounted on the seat base.

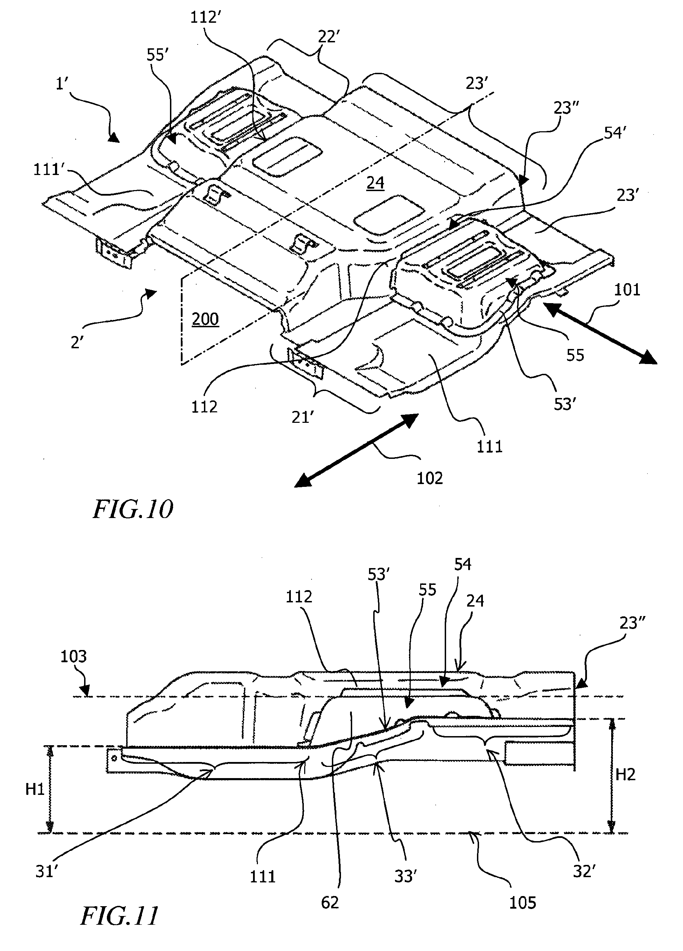

Figures 10 and 16 relate to an alternative embodiment of a body 1' according to the present invention, that is different from the one showed in figures from 5 to 9 because of a different floor 2' structure and of a different seat base 55, 55' structure. Figure 10 shows that in such embodiment the middle portion 23' of the body 1' has a raised course with respect to the two lateral portions 21', 22'. The expression "raised course" means that the middle portion 23' develops upwards with respect to the two lateral portions 21', 22' of the body 1'. In particular, the middle portion 23' of the floor 2' is raised with respect to the lateral portions 21', 22', defining an upper position 24 of the floor 2' which forms a part of the engine compartment of the industrial vehicle to which such body 1' will be mounted.

As shown in figures 10 and 11, the middle portion 23' comprises a first flank 23'' which develops from the first lateral portion 21' to the upper portion 24, and a second flank, symmetrical to the first one with respect to a plane of symmetry 200, which develops from the second lateral portion 22' to the same upper portion 24.

Again with reference to figure 10 and 11, the body 1' comprises two seat bases 55, 55' symmetrically arranged with respect to the middle portion 23' of the floor 2'. The first lateral portion 21' of the floor 2' defines the first bearing surface 111 for the first seat base 55, while the first flank 23'' of the middle portion 23' of the floor 2 defines the second bearing surface 112 for the same seat base 55. In the same way, the second lateral portion 22' of the floor 2' defines a first bearing surface 111' for the second seat base 55' of the body 1, while a second flank of the middle portion 23' defines a second bearing surface 112' for the second seat base 55'.

Figures from 13 to 15 show from different points of view of the seat bases 55, 55' of the body 1', whose the support part 62 comprises a first side 62' and a second side 62" facing each other. A third side 62''' of the seat base 5 develops in a continuous way from the first 62' and the second side 62''. In other words, the third side 62''' is connected from one side to the first side 62' and from the opposite side to the second side 62''. The connecting part 61 substantially has a four-side configuration. It can be seen that the first side 62', the second side 62'' and the third side 62''' of the support part 62 develop from the corresponding sides 61', 61'' and 61''' of the connecting part 61. In particular it can be seen that the sides of the support part 62 develop from the connecting part 61 in a divergent way, in other words they define a tapered configuration towards the connecting part 61 itself.

According to a preferred embodiment shown in the figures, the lower edge 53' develops outwards in a continuous way along the whole extension of the three sides 62', 62'', 62''' of the support part 62. As said above, the shape of the lower edge 53' matches with the shape of the first surface 111 of the first lateral portion 21' and is welded to such surface along its whole extension. Such solution allows to increase the strength and the stability of the connection of the seat base to the floor 2'.

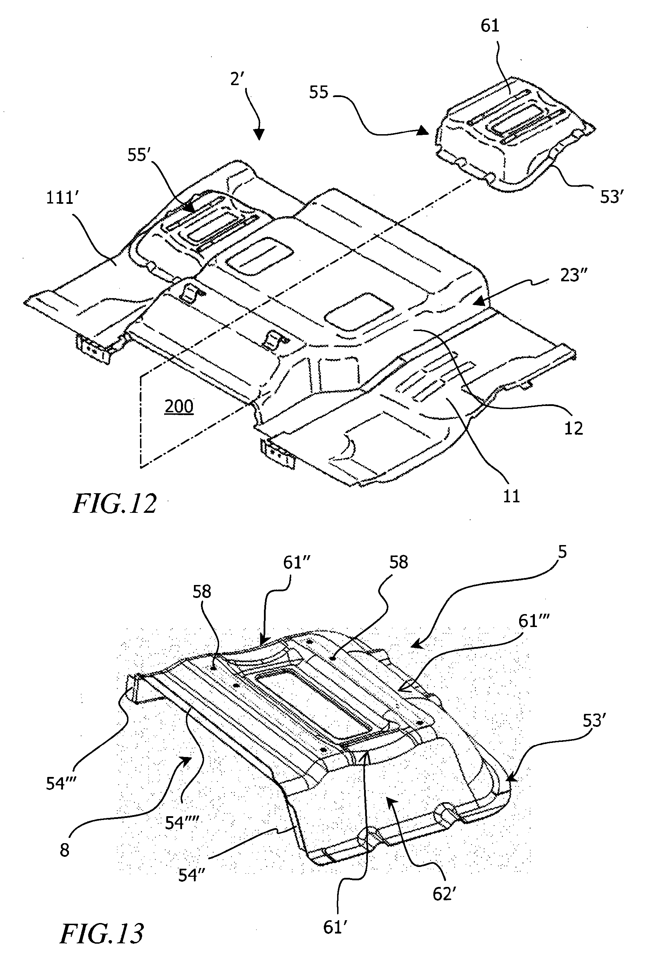

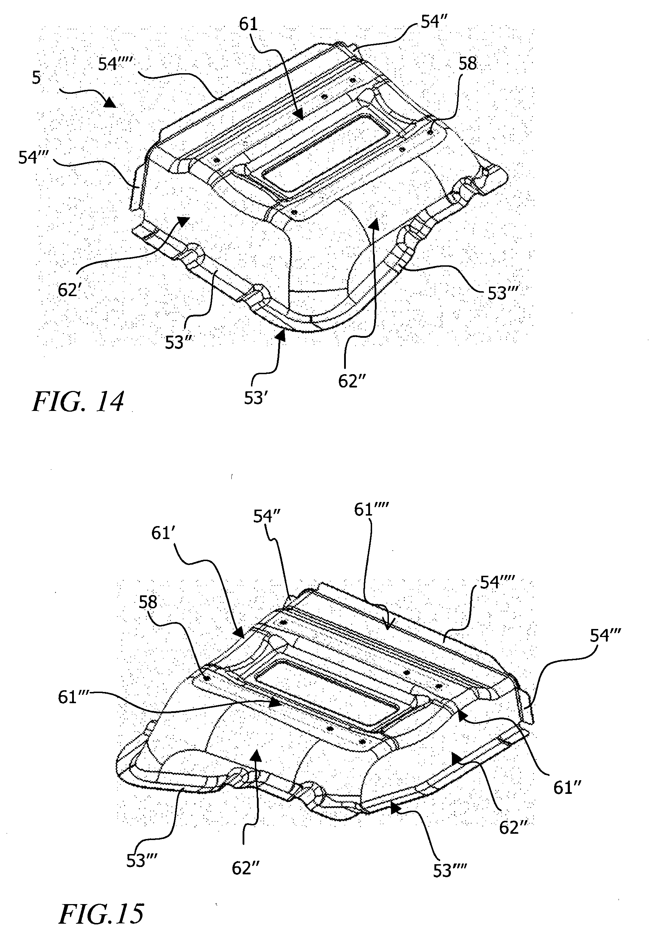

With particular reference to figure 13, it can be seen that the first side 62' of the support part 62, the second side 62'' of the same support part 62 and a side of the connecting part 61 define the edge of an open portion 8. The latter is defined in a position opposite to the third side 62''' of the support part 62. As shown in the figure the edges of the second connecting edge 54' are folded outwards with respect to such open portion 8. In particular a first edge 54'' protrudes outwards from the first side 62' of the support part 62, a second edge 54''' protrudes from the second side 62" of the same support part 62 and a third edge 54''' protrudes outwards from a side 61'''' of the connecting part 61 (shown in figure 15) opposite to said first side 61''' of the same connecting part 61.

With reference again to figure 13, the edges 54'', 54''' and 54'''' are folded outwards with respect to the hollow body of the seat base 5, so that they are arranged substantially on the same plane. With reference again to figures 10 and 11, such edges 54'', 54''' e 54'''' are substantially flat-shaped and geometrically match with the bearing surface 112, which is substantially flat-shaped as well, of the first flank 23'' of the middle portion 23'. The geometric matching between the profiles of the welded parts and the outward development of the edges 54'', 54''' and 54'''' makes the welding process easier, and improves the strength of the welding itself.

In the solution showed, the three edges 54'', 54''' and 54'''' together define a second connecting edge 54' substantially discontinuous. As an alternative, the second connecting edge 54' may be continuous, for example, always developing outwards, but along the whole perimetral length of the open portion 8.

Figure 11 is a lateral view of the body 1' and allows to see the configuration of the first bearing surface defined by the first lateral portion 21' of the floor. Given the symmetry of the floor, also in this case the following considerations are valid also for the bearing surface 111' defined by the second lateral portion 22' of the floor 2'.

The bearing surface 111 of the first portion 21' of the floor 2' comprises a first region 31' (in the following indicated as front region 31') and a second region 32' (in the following indicated as rear region 32') which develops in raised position with respect to the first region 31'. This means that the front region 31' develops at an height H1 lower than the height H2 of the rear region 32 with respect to a substantially horizontal reference plane 105 (shown in figure 11). The first lateral portion 111 comprises also an intermediate region 33' which connects the front region 31' with the rear region 32', substantially developing along an inclined plane. The raised position of the second region 32' with respect to the first region 31' defines a space under the floor 2' that is useful for housing one of the front wheels of the industrial vehicle.

According to a preferred embodiment, a first segment 53" of the lower edge 53' is welded on the first region 31', a second segment 53''' is welded on the intermediate region 33' and a third segment 53''' is welded on the second region 32' of the first lateral portion 21'.

This technical solution improves the distribution of the stresses on the floor 2' of the body 1' of the vehicle and, in general, improves the stability of the first seat base 55. In fact, possible stresses oriented according to a longitudinal direction (indicated by 102 in figure 10) parallel to the plane of symmetry 200 of the body 1' are advantageously distributed on the whole intermediate region 33' and on the whole rear region 32' of the first bearing surface 111 of the portion 21', and are also partially absorbed by the middle portion 23', by virtue of the welding to the second bearing surface 112'.

With reference again to figure 11, it can be seen that the support part 62 is shaped so that, after the welding of the lower edge 53' to the first bearing surfaces 111, the connecting part 61 is arranged on a plane 103 substantially parallel to a reference horizontal plane 105.

The present invention relates also to a method for realizing a body 1, 1' of an industrial vehicle of medium or high capacity. According to the method of the present invention, a floor 2, 2' of said body 1, 1' is realized by defining a first bearing surface 11, 11, 111, 111' and a second bearing surface 12, 12', 112, 112' which develops in raised position with respect to the first surface 11, 11, 111, 111'. Moreover, according to the method of the invention, a seat base 5, 5', 55, 55' is realized by moulding, obtaining a connecting part 51, 61 to which the seat can be connected, and a support part 52, 62 which develops from said connecting part 51, 61. According to the present invention the first connecting edge 53, 53' is welded to the first bearing surface 11, 11', 111, 111', and said at least second connecting edge 53' is welded to the second bearing surface 12, 12', 112, 112' of the floor 2, 2'. According to a preferred embodiment of the method according to the invention, the first connecting edge 53, 53' is defined so that it matches with the first bearing surface 11, 11, 111, 111' of said floor 2, 2', and the second connecting edge 54, 54' is defined so that the latter matches with the second surface 12, 12', 112, 112' of said floor 2, 2'.

As said above, the described method allows to save time and money from the point of view of the manufacturing process. Unlike the traditional solution, in fact, the seat base is obtained by means of a simple moulding operation. The traditional assembling of parts is thus avoided, with a remarkable reduction of costs. As said above, the welding of the seat base 5, 5', 55, 55' to the floor 2, 2' makes the body 1, 1' particularly stable and compact, allowing the distribution of the stresses acting on the seat base on a wide floor surface. This advantageous condition allows also to economize some material, since both the floor 2, 2' and the same seat base 5, 5', 55, 55' may be realized with a relatively limited thickness. Finally, from the point of view of the realization method of the body, it is possible to note that after being welded to the floor, the seat base and the floor may be advantageously painted together, with obvious advantages from the economic point of view.

The body for industrial vehicle according to the invention, can be subjected to numerous variations or modification, without departing from the scope of the invention, as defined in the appended claims. Practically, the material used and also the dimensions and the shapes may be any, according to the needs and to the state of the art.

## Claims

1. Body (1, 1') for an industrial vehicle of medium or high capacity comprising:
- at least a first seat base (5, 5', 55, 55');
- a floor (2, 2') comprising a first bearing surface (11, 11', 111, 111') and a second bearing surface (12, 12', 112, 112') for said seat base (5, 5', 55, 55'), said second bearing surface (12, 12', 112, 112') having a raised course with respect to said first bearing surface (11, 11', 111, 111'),
wherein said seat base (5, 5', 55, 55') comprises a hollow body, realized by moulding, comprising:
- a connecting part (51, 61) to which said seat can be connected,
- a support part (52, 62) which develops from said connecting part (51, 61),
- at least a first connecting edge (53, 53') and at least a second connecting edge (54, 54')
and wherein said first connecting edge (53, 53') is welded to the first bearing surface (11, 11', 111, 111'), of said floor (2, 2') and said second connecting edge (54, 54') is welded to said second bearing surface (12, 12', 112, 112') of said floor (2, 2'),
**characterized in that**
said first connecting edge (53, 53') geometrically matches with said first bearing surface (11, 11', 111, 111') and wherein said second connecting edge (54, 54') geometrically matches with said second bearing surface (12, 12', 112, 112').

2. Body according to claim 1, wherein said floor (2') comprises at least a first portion (21') and at least a second portion (23') which has a raised course with respect to said first portion (21') defining an upper surface (24) and a first flank (23") which develops between said first portion (21') and said second upper surface (24), said first portion (21') defining said first bearing surface (111) to which said first connecting edge (53') of said seat base (55) is welded, said flank (23'') of said second portion (23') defining said second bearing surface (112) to which said second connecting edge (54') of said seat base (55) is welded.

3. Body according to claim 2, wherein said first portion (21') of said floor (2') comprises a first region (31') and a second region (32') which develops in raised position with respect to said first region (31'), said first portion (21') comprising an intermediate region (33') which connects said first region (31') with said second region (32'), said first connecting edge (53') comprising a first segment (53''') welded to said first region (31), a second segment (53''') welded to said intermediate region (33') and a third segment (53'''') welded to said second region (32').

4. Body according to any of the claims from 1 to 3, wherein:
- said connecting part (61) of said seat base (55) has a substantial four-side configuration (61', 61'', 61''', 61'''') and wherein
- said support part (62) of said seat base (55) comprises a first side (62'), a second side (62'') facing said first side (62') and a third side (62''') which develops continuously between said first side (62') and said second side (62'''), said sides (62', 62'', 62''') developing in a divergent way, each one of them from a respective side (62', 62", 62''') of said connecting part (61).

5. Body according to claim 4, wherein said first side (62') of said support part (62), said second side (62") of said support part (62) and a side (61'''') of said connecting part (61) opposite to said third side (61''') of the same connecting part (61) define the edge of an open portion (8) defined in a position opposite to said third side (62''') of said support part (62), said second connecting edge (54') comprising three edges (54", 54''', 54'''') each one of them develops outwards from one of said edges of said open portion (8).

6. Body according to any of the claims from 1 to 5 wherein said support part (62) of said seat base (55) is configured so that, after the welding of said first connecting edges (53') to said bearing surface (111), said connecting part (61) is arranged on a plane (103) substantially parallel to a reference horizontal plane (105).

7. Body according to claim 1, wherein said floor (2) comprises at least a portion (21,22) which in its turn comprises at least a first region (31), a second region (32) which develops in raised position with respect to said first region (31) and an intermediate region (33) which connects said first region (31) with said second region (32), said first bearing surface (11, 11') being defined by said intermediate region, said second bearing surface (12, 12') being defined by said second region (32).

8. Industrial vehicle comprising a body (1, 1') according to any of the previous claims from 1 to 7.

9. Method for realizing a body (1, 1') of an industrial vehicle of medium or high capacity, according to any of the previous claims 1 to 7, said method comprising the steps of:
- realizing a floor (2, 2') defining a first bearing surface (11, 11', 111, 111') and a second bearing surface (12, 12' 112, 112') for said seat base (5, 5', 55, 55'), said second bearing surface (12, 12', 112, 112') having a raised course with respect to said first bearing surface (11, 11', 111, 111');
- realizing, by metal moulding , a seat base (5, 5', 55, 55') defining a connecting part (51, 61) to which a seat can be connected and a support part (52, 62) which develops from said connecting part (51, 61), said seat base (5, 5', 55, 55') being realized so that it defines a first connecting edge (53, 53') and at least a second connecting edge (54, 54');
- welding said first connecting edge (53, 53') to the first bearing surface (11, 11', 111, 111'), of said floor (2, 2') and said second connecting edge (54, 54') to said second bearing surface (12, 12', 112, 112') of said floor (2, 2'),
wherein said first connecting edge (53, 53') is defined so that it matches to said first bearing surface (11, 11', 111, 111') and wherein said second connecting edge (54, 54') is defined so that it matches to said second bearing surface (12, 12', 112, 112').

## Patentansprüche

1. Körper (1, 1') für ein Industrie-Fahrzeug mit mittlerer oder hoher Kapazität, umfassend
- wenigstens eine erste Sitz-Basis (5, 5', 55, 55');
- einen Boden (2, 2'), umfassend eine erste Auflage-Fläche (11, 11', 111, 111') und eine zweite Auflage-Fläche (12, 12', 112, 112') für die Sitz-Basis (5, 5', 55, 55'), wobei die zweite Auflage-Fläche (12, 12', 112, 112') einen erhöhten Verlauf in Bezug auf die erste Auflage-Fläche (11, 11', 111, 111') aufweist, wobei die Sitz-Basis (5, 5', 55, 55') einen Hohlkörper umfaßt, der durch Formen realisiert ist, umfassend
- ein Verbindungs-Teil (51, 61), mit dem der Sitz verbunden werden kann,
- ein Träger-Teil (52, 62), das aus dem Verbindungs-Teil (51, 61) hervorgeht,
- wenigstens eine erste verbindende Kante (53, 53') und wenigstens eine zweite verbindende Kante (54, 54'),
und wobei die erste verbindende Kante (53, 53') angeschweißt ist an die erste Auflage-Fläche (11, 11', 111, 111') des Bodens (2, 2') und die zweite verbindende Kante (54, 54') angeschweißt ist an die zweite Auflage-Fläche (12, 12', 112, 112') des Bodens (2, 2);
**dadurch gekennzeichnet, daß**
die erste verbindende Kante (53, 53') geometrisch abgestimmt ist auf die erste Auflage-Fläche (11, 11', 111, 111') und wobei die zweite verbindende Kante (54, 54') geometrisch abgestimmt ist auf die zweite Auflage-Fläche (12, 12', 112, 112').

2. Körper nach Anspruch 1, wobei der Boden (2') wenigstens einen ersten Teil (21') und wenigstens einen zweiten Teil (23') umfaßt, der einen erhöhten Verlauf in Bezug auf den ersten Teil (21') aufweist und eine obere Fläche (24) und eine erste Seite (23'') definiert, die zwischen dem ersten Teil (21') und der zweiten oberen Fläche (24) hervorgeht, wobei der erste Teil (21') die erste Auflage-Fläche (111) definiert, mit der die erste verbindende Kante (53') der Sitz-Basis (55) verschweißt ist, wobei die Seite (23") des zweiten Teils (23') die zweite Auflage-Fläche (112) definiert, mit der die zweite verbindende Kante (54') der Sitz-Basis (55) verschweißt ist.

3. Körper nach Anspruch 2, wobei der erste Teil (21') des Bodens (2') einen ersten Bereich (31') und einen zweiten Bereich (32') umfaßt, der in erhöhter Position in Bezug auf den ersten Bereich (31') hervorgeht, wobei der erste Teil (21') einen Zwischen-Bereich (33') umfaßt, der den ersten Bereich (31') mit dem zweiten Bereich (32') verbindet, wobei die erste verbindende Kante (53') ein erstes Segment (53'''), das an den ersten Bereich (31) angeschweißt ist, ein zweites Segment (53'''), das an den Zwischen-Bereich (33') angeschweißt ist, und ein drittes Segment (53"") umfaßt, das an den zweiten Bereich (32') angeschweißt ist.

4. Körper nach irgendeinem der Ansprüche von 1 bis 3, wobei:
- das Verbindungs-Teil (61) der Sitz-Basis (55) eine im Wesentlichen vierseitige Konfiguration (61', 61'', 61''', 61''') aufweist; und wobei
- das Träger-Teil (62) der Sitz-Basis (55) eine erste Seite (62'), eine zweite Seite (62"), die zu der ersten Seite (62') zeigt, und eine dritte Seite (62''') umfaßt, die kontinuierlich zwischen der ersten Seite (62') und der zweiten Seite (62") hervorgeht, wobei die Seiten (62', 62", 62''') in einer divergenten Weise hervorgehen, jede von ihnen von einer jeweiligen Seite (62', 62'', 62''') des Verbindungs-Teils (61).

5. Körper nach Anspruch 4, worin die erste Seite (62') des Träger-Teils (62), die zweite Seite (62") des Träger-Teils (62) und eine Seite (61"") des Verbindungs-Teils (61) gegenüber der dritten Seite (61''') desselben Verbindungs-Teils (61) die Kante eines offenen Teils (8) definieren, der in einer Position gegenüber der dritten Seite ((62''') des Träger-Teils (62) definiert ist, wobei die zweite verbindende Kante (54') drei Kanten (54", 54''', 54''') umfaßt, von denen jede einzelne von einer der Kanten des offenen Teils (8) nach außen hervorgeht.

6. Körper nach irgendeinem der Ansprüche von 1 bis 5, wobei der Träger-Teil (62) der Sitz-Basis (55) derart konfiguriert ist, daß nach dem Anschweißen der ersten verbindenden Kanten (53') an die Auflage-Fläche (111) das Verbindungs-Teil (61) auf einer Ebene (103) angeordnet ist, die im Wesentlichen parallel zu einer horizontalen Referenz-Fläche (105) ist.

7. Körper nach Anspruch 1, wobei der Boden (2) wenigstens einen Teil (21, 22) umfaßt, der seinerseits umfaßt: wenigstens einen ersten Bereich (31), einen zweiten Bereich (32), der in erhöhter Position in Bezug auf den ersten Bereich (31) hervorgeht, und einen Zwischen-Bereich (33), der den ersten Bereich (31) mit dem zweiten Bereich (32) verbindet, wobei die erste Auflage-Fläche (11, 11') durch den Zwischen-Bereich definiert ist und die zweite Auflage-Fläche (12, 12') durch den zweiten Bereich (32) definiert ist.

8. Industrie-Fahrzeug, umfassend einen Körper (1, 1') nach irgendeinem der vorigen Ansprüche von 1 bis 7.

9. Verfahren zum Realisieren eines Körpers (1, 1') eines Industriefahrzeugs mit mittlerer oder hoher Kapazität gemäß irgendeinem der vorigen Ansprüche 1 bis 7, wobei das Verfahren die Schritte umfaßt, daß man
- einen Boden (2, 2') realisiert, der eine erste Auflage-Fläche (11, 11', 111, 111') und eine zweite Auflage-Fläche (12, 12', 112, 112') für die Sitz-Basis (5, 5', 55, 55') definiert, wobei die zweite Auflage-Fläche (12, 12', 112, 112') einen erhöhten Verlauf in Bezug auf die erste Auflage-Fläche (11, 11', 111, 111') aufweist;
- eine Sitz-Basis (5, 5', 55, 55') durch Metall-Formen realisiert, die ein Verbindungs-Teil (51, 61), mit dem ein Sitz verbunden werden kann, und ein Träger-Teil (52, 62) definiert, das von dem Verbindungs-Teil (51, 61) hervorgeht, wobei die Sitz-Basis (5, 5', 55, 55') so realisiert wird, daß sie eine erste verbindende Kante (53, 53') und wenigstens eine zweite verbindende Kante (54, 54') definiert;
- die erste verbindende Kante (53, 53') mit der ersten Auflage-Fläche (11, 11', 111, 111') des Bodens (2, 2') verschweißt und die zweite verbindende Kante (54, 54') mit der zweiten Auflage-Fläche (12, 12', 112, 112') des Bodens (2, 2') verschweißt;
wobei die erste verbindende Kante (53, 53') so definiert ist, daß sie abgestimmt ist auf die erste Auflage-Fläche (11, 11', 111, 111'), und wobei die zweite verbindende Kante (54, 54') so definiert ist, daß sie abgestimmt ist auf die zweite Auflage-Fläche (12, 12', 112, 112').

## Revendications

1. Carrosserie (1, 1') d'un véhicule industriel de moyenne ou grande capacité comprenant :
- au moins une première base de siège (5, 5', 55, 55') ;
- un plancher (2, 2') comprenant une première surface porteuse (11, 11', 111, 111') et une deuxième surface porteuse (12, 12', 112, 112') pour ladite base de siège (5, 5', 55, 55'), ladite deuxième surface porteuse (12, 12', 112, 112') suivant un itinéraire surélevé par rapport à ladite première surface porteuse (11, 11', 111, 111'),
dans laquelle ladite base de siège (5, 5', 55, 55') comprend un corps creux, réalisé par moulage, comprenant :
- une partie de liaison (51, 61) à laquelle ledit siège peut être relié,
- une partie de support (52, 62) qui se développe à partir de ladite partie de liaison (51, 61),
- au moins un premier bord de liaison (53, 53') et au moins un deuxième bord de liaison (54, 54'),
et dans laquelle ledit premier bord de liaison (53, 53') est soudé à la première surface porteuse (11, 11', 111, 111') dudit plancher (2, 2') et ledit deuxième bord de liaison (54, 54') est soudé à ladite deuxième surface porteuse (12, 12', 112, 112') dudit plancher (2, 2'),
**caractérisée en ce que**
ledit premier bord de liaison (53, 53') correspond géométriquement à ladite première surface porteuse (11, 11', 111, 111') et dans laquelle ledit deuxième bord de liaison (54, 54') correspond géométriquement à ladite deuxième surface porteuse (12, 12', 112, 112').

2. Carrosserie selon la revendication 1, dans laquelle ledit plancher (2') comprend au moins une première portion (21') et au moins une deuxième portion (23') ayant un itinéraire surélevé par rapport à ladite première portion (21') définissant une surface supérieure (24) et un premier flanc (23") qui se développe entre ladite première portion (21') et ladite deuxième surface supérieure (24), ladite première portion (21') définissant ladite première surface porteuse (111) sur laquelle ledit premier bord de liaison (53') de ladite base de siège (55) est soudé, ledit flanc (23") de ladite deuxième portion (23') définissant ladite deuxième surface porteuse (112) sur laquelle ledit deuxième bord de liaison (54') de ladite base de siège (55) est soudé.

3. Carrosserie selon la revendication 2, dans laquelle ladite première portion (21') dudit plancher (2') comprend une première région (31') et une deuxième région (32') qui se développe à une position surélevée par rapport à ladite première région (31'), ladite première région (21') comprenant une région intermédiaire (33') qui relie ladite première région (31') à ladite deuxième région (32'), ledit premier bord de liaison (53') comprenant un premier segment (53''') soudé à ladite première région (31), un deuxième segment (53''') soudé à ladite région intermédiaire (33') et un troisième segment (53'''') soudé à ladite deuxième région (32').

4. Carrosserie selon l'une quelconque des revendications 1 à 3, dans laquelle :
- ladite partie de liaison (61) de ladite base de siège (55) a une configuration sensiblement à quatre côtés (61', 61", 61''', 61'''') et dans laquelle
- ladite partie de support (62) de ladite base de siège (55) comprend un premier côté (62'), un deuxième côté (62") faisant face au dit premier côté (62') et un troisième côté (62''') qui se développe continuellement entre ledit premier côté (62') et ledit deuxième côté (62"), lesdits côtés (62', 62", 62''') se développant d'une manière divergente, chacun d'eux à partir d'un côté respectif (62', 62", 62''') de ladite partie de liaison (61).

5. Carrosserie selon la revendication 4, dans laquelle ledit premier côté (62') de ladite partie de support (62), ledit deuxième côté (62") de ladite partie de support (62) et un côté (61'''') de ladite partie de liaison (61) opposé au dit troisième côté (61''') de la même partie de liaison (61) définissent le bord d'une portion ouverte (8) définie à une position opposée au dit troisième côté (62''') de ladite partie de support (62), ledit deuxième bord de liaison (54') comprenant trois bords (54'', 54''', 54''''), chacun d'eux se développant vers l'extérieur à partir de l'un desdits bords de ladite portion ouverte (8).

6. Carrosserie selon l'une quelconque des revendications 1 à 5, dans laquelle ladite partie de support (62) de ladite base de siège (55) est configurée de sorte que, après le soudage desdits premiers bords de liaison (53') sur ladite surface porteuse (111), ladite partie de liaison (61) est agencée dans un plan (103) sensiblement parallèle à un plan horizontal de référence (105).

7. Carrosserie selon la revendication 1, dans laquelle ledit plancher (2) comprend au moins une portion (21, 22) qui comprend à son tour au moins une première région (31), une deuxième région (32) qui se développe à une position surélevée par rapport à ladite première région (31) et une région intermédiaire (33) qui relie ladite première région (31) à ladite deuxième région (32), ladite première surface porteuse (11, 11') étant définie par ladite région intermédiaire, ladite deuxième surface porteuse (12, 12') étant définie par ladite deuxième région (32).

8. Véhicule industriel comprenant une carrosserie (1, 1') selon l'une quelconque des revendications 1 à 7.

9. Procédé de réalisation d'une carrosserie (1, 1') d'un véhicule industriel de moyenne ou grande capacité, selon l'une quelconque des revendications 1 à 7, ledit procédé comprenant les étapes de :
- la réalisation d'un plancher (2, 2') définissant une première surface porteuse (11, 11', 111, 111') et une deuxième surface porteuse (12, 12', 112, 112') pour ladite base de siège (5, 5', 55, 55'), ladite deuxième surface porteuse (12, 12', 112, 112') suivant un itinéraire surélevé par rapport à ladite première surface porteuse (11, 11', 111, 111'),
- la réalisation, par moulage métallique, d'une base de siège (5, 5', 55, 55') définissant une partie de liaison (51, 61) à laquelle un siège peut être relié et une partie de support (52, 62) qui se développe à partir de ladite partie de liaison (51, 61), ladite base de siège (5, 5', 55, 5') étant réalisée de manière à définir un premier bord de liaison (53, 53') et au moins un deuxième bord de liaison (54, 54') ;
- le soudage dudit premier bord de liaison (53, 53') à la première surface porteuse (11, 11', 111, 111'), dudit plancher (2, 2') et ledit deuxième bord de liaison (54, 54') à ladite deuxième surface porteuse (12, 12', 112, 112') dudit plancher (2, 2'),
dans lequel ledit premier bord de liaison (53, 53') est défini de manière à correspondre à ladite première surface porteuse (11, 11', 111, 111') et dans lequel ledit deuxième bord de liaison (54, 54') est défini de manière à correspondre à ladite deuxième surface porteuse (12, 12', 112, 112').
